# EUROPEAN PATENT SPECIFICATION

(11) **EP 2 026 959 B1**
(45) Date of publication and mention of the grant of the patent: **17.08.2011**
(21) Application number: 06820965.9
(22) Date of filing: 24.11.2006
(51) Int. Cl.: B32B 5/26, B32B 27/12

(54) **DECORATIVE PLASTIC SHEET LAMINATE AND PROCESS FOR ITS PREPARATION**
DEKORATIVE KUNSTSTOFFFOLIE UND VERFAHREN ZU IHRER HERSTELLUNG
STRATIFIÉ DE FEUILLES DE PLASTIQUE DÉCORATIF ET SON PROCÉDÉ DE PRÉPARATION

(30) Priority: 25.11.2005 EP 05025700
(43) Date of publication of application: 25.02.2009
(73) Proprietor: FRATI LUIGI S.P.A., 46030 Pomponesco (MN) (IT); Fiscagomma S.p.A., 27029 Vigevano PV (IT); SO.GE.TEC. S.p.A., 34071 Cormons GO (IT)
(72) Inventor: SIBILIA, Eugenio, I-27025 Belcreda di Gambolò (PV) (IT); COSTAMAGNA, Achille, I-27029 Vigevano (PV) (IT)
(74) Representative: Trupiano, Federica
(86) International application number: PCT/IB2006/003336
(87) International publication number: WO 2007/060531

(56) References cited:
- EP-A- 0 962 315
- EP-A- 1 072 398

## Description

### OBJECT OF THE INVENTION

The object of the present invention is a layered plastic panel of the "laminate" kind, a method for manufacturing the same and the use thereof as a decorative element, particularly for interior and exterior coverings, for making furnishings such as furniture, lamps or the like, or for making various kinds of working surfaces, and intended for a plurality of applications.

### BACKGROUND OF THE INVENTION

The plastic laminate, also known as the HPL laminate, is a product obtained by means of high-pressure manufacture processes, and mainly consists of a kraft paper assembly, which is generally impregnated with a phenolic resin which is the "base" for the laminate, and at least one decorative sheet positioned on at least one surface of the kraft paper assembly. The decorative sheet is generally made of low-grammage cellulose impregnated with melamine resin. In the traditional HPL laminates, there may also be provided a surface sheet with a protective function, which is placed on the surface of the decorative sheet and generally also based on cellulose impregnated with melamine resin. The decorative/protective layers are generally called the "overlays".

For simplicity, two examples of simplified schemes relating to the manufacture of traditional plastic laminates are set forth herein below.
Laminate A:
   1) overlay
   2) decorative sheet
   3) kraft paper layers
   4) decorative sheet
   5) overlay
   or
laminate B:
   1) decorative sheet
   2) kraft paper layers
   3) decorative sheet

The products as described above exhibit high resistance to abrasion, water, impacts and chemicals and they further exhibit good mechanical characteristics. For this reason, they are widely used for example as coating elements, furnishings, working surfaces, interior partitions. Due to the particular type of applications, people have been working hard, and still work hard for manufacturing new products which, while generally maintaining good mechanical and technical characteristics, also exhibit improved aesthetic and mechanical aspects as compared with the prior art products.

For example, for special applications in the furniture field, laminated products with determined surface coatings are known, and among those, those laminated products with surface coatings obtained by means of polymers that are capable of giving a "leather-like" effect are particularly interesting.

This kind of product is obtained by means of two different processes: the first one is the actual preparation of a "base" laminate consisting of kraft paper layers impregnated with phenolic resin, by means of HPL process, which allows obtaining a "raw" HPL laminate; the second, subsequent process, provides a coupling between the "raw" laminate and a finishing surface layer that exhibits the aesthetic characteristics desired and which for example may be made of polyurethane. This subsequent coupling between the "raw" laminate and the surface, aesthetic layer is generally carried out by bonding the two components and is directly carried out by the manufacturer of the "raw" laminate, by third buyers of the "raw" laminate and manufacturers of the finished laminate or also directly by the end user of the product, for example directly by the furniture factory, when applied to the furniture field. The finished product can have one or more surface finishing layers, for protection purposes. The manufacture of laminates as described above, accordingly, entails at least two different and subsequent processing stages, one relating to the manufacture by means of high-pressure lamination of the "raw" laminate consisting of superimposed kraft paper sheets impregnated with phenolic resin, and the other one relating to the coupling by bonding of the "raw" laminate with the surface layer. In addition, the above products suffer from the drawback that they often have areas which are not perfectly coupled, i.e. non homogeneous. Furthermore, since they are provided by means of bonding, they tend to get easily "decoupled", also in subsequent processing steps, when they have, for example, to be subjected to thermoforming, and then shaped and folded according to preset shapes for the final use to which they are intended.

Still to the purpose of having new products which, as stated above, while generally maintaining good mechanical and technical characteristics, also have improved aesthetic and technical aspects as compared with the prior art products, laminate panels have been developed which are made with alternative materials from those used for the structure (kraft paper impregnated with phenolic resin) typically forming the base of the traditional laminates. For example, EP 249583 describes a decorative plastic laminate comprising a central body composed of a plurality of sheets made of alpha-cellulose optionally mixed with rayon fibers (cellulose acetate/cellulose xanthate), impregnated with amine resin, with the characteristic of providing at least one of said sheets as a decorated sheet or at least one decorative sheet interposed between said alpha-cellulose based sheets. The plastic laminate thus obtained has a transparency effect due to the base cellulose structure and maintains good mechanical characteristics. Due to the use of cellulose, however, the product results rather "heavy" as compared with, for example, the traditional laminates and suitable only to several uses in specific fields.

EP 1 072 398 discloses a layer, such as a thermoplastic decorative layer, that may be used in an end product, such as a laminate, while being compatible with other layers of the and product, such as by providing enhanced bonding with a melamine overlay layer, and at the same time providing a desired visual characteristic, such as intense and/or uniform coloring, to the end product. It also discloses a system and a method for manufacturing such a layer. For example, EP 1 072 398 discloses a laminate comprising an overlay layer, a thermoplastic decorative layer and phenolic resin impregnated kraft paper (see figure 4).

EP 0 962 315 discloses a textured release sheet of polypropylene in which the textured portion is provided simultaneous with the forming of the sheet. A typical decorative laminate sheet assembly is described to include several layers of thermosetting resin impregnated decorative layer, which may be further overlaid with a thermosetting resin impregnated overlay sheet.

Other HPL plastic laminated products that have proved to be very interesting are the so-called thermoformable or post-formable, i.e. those hot-bendable products that maintain, after cooling, the desired curvature radius, either concave or convex. These products, however, to be advantageously shaped, require a thermoforming process subsequent to the lamination step, which entails the use of very high temperatures, even proximate to 400°C. Accordingly, it is understood that the thermoforming operation can be carried out only on suitable laminates, which can resist high temperatures without aesthetic damages, and have no decorative elements or layers on the surface thereof, which are sensitive to high temperature. What has been described above greatly restrains the scope in the field of thermoformable laminates, and reveals the need of developing novel products alternative to the traditional ones, which can be subjected to the process of thermoforming subsequent to the lamination step, without damages to the decorative component of the panel resulting from this operation. Furthermore, when prior art panels have been shaped, there is no way that they return to their original shape, thereby being disadvantageous in that, in case of errors or in case the shape has to be, even slightly, modified, the product has to be completely replaced, with considerable damages also in terms of costs.

### OBJECTS OF THE INVENTION

Accordingly, the object of the invention is to provide a layered plastic panel of the "laminate" kind which can be provided as finished in an individual work stage, particularly in the high-pressure lamination step (HPL).

Another object of the present invention is to provide a layered plastic panel of the "laminate" kind not resulting from any coupling by means of gluing of panels from different work steps.

It is also an object of the present invention to provide a layered plastic panel of the "laminate" kind which is homogeneous and does not create decoupling in the subsequent work steps or over time.

Yet another object of the present invention is to provide a layered plastic panel of the "laminate" kind which can be thermoformed without creating decoupling.

A further object of the present invention is to provide a layered plastic panel of the "laminate" kind which is light and maneuverable, which exhibits, at the same time, aesthetic characteristics such as transparency and translucence, and can be thermoformed at lower temperatures than those traditionally used for hot thermoforming .

A still further object of the present invention is to provide a layered plastic panel of the "laminate" kind which, after it has been shaped, can be also returned to the original shape, with consequent advantages, also in terms of costs.

An object of the present invention is also to provide a high- pressure lamination method for preparing a layered plastic panel of the "laminate" kind which is simple and comprises an individual main lamination step and does not require distinct and subsequent coupling steps for obtaining the finished product.

### DESCRIPTION

These and other objects and the advantages thereof, as will be better understood from the description below are achieved by means of a layered plastic panel of the "laminate" type as defined in claim 1 According to the invention, said polymeric component is selected as polyurethane ally

The main characteristic of said layered plastic panels of the "laminate" kind is that they are obtained by means of direct lamination of a layered product comprising both the main part or core in kraft paper impregnated with resin, particularly phenolic resin, and the surface polymeric part, which is usually polyurethane-based. Lamination is carried out at high-pressure and at temperatures which are suitable for the type of components being used. The polyurethane surface layer or mixtures thereof make the product particularly interesting from an aesthetic point of view, since according to the kind of polyurethane used and optionally the kind of various components to which it is admixed, the external appearance of the finished panel can be, for example, of the type "synthetic leather" or "fake leather". Whereby, panels of the "laminate" type can be obtained which have a surface finishing of a particular aesthetic value, though having the typical characteristics of a traditional laminated panel obtained according to the prior art, i.e. with the traditional techniques of coupling by means of bonding subsequent to the lamination step between core and surface layer with a "synthetic leather" effect. Still according to the present invention, the polyurethane surface layer can be processed, before the lamination step, for example by transferring a metal sheet on the surface thereof, which gives a particular aesthetic value to the finished panel.

The panels according to the invention have a number of advantages as compared with the prior art panels. Since they are obtained in an individual lamination step, they do not cause decoupling, either caused by the fact of being used for a long time or caused by any subsequent processing steps, such as thermoforming. The product can be easily obtained by means of an individual main processing step and thus does not require subsequent coupling steps, with considerable advantages also in terms of costs. Furthermore, the product according to the invention can be further processed in an easy manner and, since it is versatile, it can be used in a greater number of applications than that obtained according to the prior art.

The panel obtained according to the invention is particularly pleasing to the touch, due to the surface layer being provided in the material commonly known as "fake leather". A different tactile sense is thus provided by the product, for example a warmer feeling exhibited by the final product and a greater softness to pressure.

Particularly interesting is the application of the panel according to the invention to the furniture field, particularly for moving walls to be employed in waiting-rooms and/or business furniture. The same standard thicknesses can be obtained as with the prior art HPL plastic laminates. During the impregnation step, the paper has the usual resin rates, whereas the pressing step, according to the type of product one desires to obtain, is carried out for a minimum time of 60' and at a maximum temperature ranging between 100°C and 160°C.

As regards the material composing the so-called "fake leather", as already said, it is a polyurethane-based polymeric material, optionally admixed with other compatible polymeric components which are capable of ensuring the same final aesthetic effect, or further coupled, for example with polyester (non-woven fabric).

The panel according to the present invention can also be obtained by replacing the kraft paper core impregnated with phenolic resin with decorative paper impregnated with melamine resin.

The panel according to the present invention has been purposely conceived such that the light can pass therethrough thus making the same pleasing to the eye and allowing the same to be advantageously used, for example, in the furniture field, particularly for lighting spots.

As a result of the innovative activity performed, a product has been obtained which associates the typical solidity of the plastic laminate according to the prior art to the flexibility and transparency of a non-woven fabric (TNT) preferably of polyester.

The panel obtained, for example, by joining these materials has, as already stated above, a body composed by overlays, i.e. paper consisting of cellulose with a very low grammage (max 50 gr/m²) impregnated with melamine resin alternating with non-woven fabric sheets (TNT).

If provided, the decorative part consists for example of various alternatives:
- paper with digital printing alternating with impregnated overlay sheets;
- impregnated, low weight decorative paper;
- colored, low-grammage, non-woven fabric which may also be impregnated, alternating with impregnated overlays;
- non-woven fabric colored by means of various methods, either impregnated and/or not impregnated, alternating with impregnated overlay sheets.

The product, due to its particular structure, is advantageously used for example in the field of interior design as a material allowing the light (both natural and artificial) to pass through, thereby any type of panel becomes aesthetically interesting for room lighting.

For example, an advantageous application is light spots for places such as discotheques and/or those implementations that are particularly sensitive to the aesthetic of each detail.

The thicknesses of the panels according to the invention characterized by the presence of at least one non-woven fabric layer are restricted by and restricting of the passage of light. This means that a layer has a maximum thickness of 2 mm for ensuring that light passes therethrough, while if the aesthetics of the panel is to be considered, (colour and consistency) then the thickness can considerably increase. In this case, the light will no longer pass through, but other advantages in terms of aesthetics will be obtained. Accordingly, greater thicknesses (within the limits set by the manufacture of the laminate), though not allowing the light to pass therethrough, are nevertheless appreciated due to their aesthetic value.

The major advantage of these products is the obvious possibility of making the plastic laminate lighter with a greater number of opportunities in various fields. To manufacture the products according to the invention, several conditions have to be maintained:
- the overlay has to be impregnated with the usual specifications of more than 60 % resin,
- the duration of the pressing step is at least 60' and the manufacture temperature ranges between 100°C and 160°C.

Generally, the products being the object of the present invention can advantageously provide at least one protective surface layer, of the overlay type, which is typically made of cellulose paper impregnated with resin, for example melamine resin, according to the uses to which they are intended, as well as according to the characteristics to be given to the finished product. Also in this case, the presence of any surface protective layer for the product is provided during the design step and is also carried out in an individual main stage of hot lamination and under pressure for forming the finished product. The method for preparing decorative layered panels of the "laminate" kind according to the present invention, is performed by means of the action of a heated press applying a pressure ranging between 40 kg/cm² and 150 kg/cm², preferably a pressure of about 80 kg/cm². The temperature at which the coupling step is carried out may range between 100°C and 400°C as a function of the characteristics of the products to be coupled.

Several practical implementations are given herein below by way of exemplary and non-limiting illustration of the present invention.

### EXAMPLE 1 (composition of the polymeric material of the "fake leather" surface layer)

The polymeric component that is coupled to the core or inner part, during the hot lamination and high-pressure step, for obtaining the decorative panel according to the findings consists at least of:
**a surface layer** with high-module which provides the product with the aesthetic characteristics (appearance, touch and the like) and the resistance to abrasion, scratch and atmospheric agents.

While the composition of said layer is preferably polyurethane-based, it may also be based on other polymers, of the type PVC, acrylic polymer dispersed in solvent or in water.

A polyurethane (PU) formulation is given by way of example:

| | |
|---|---|
| 35% dry PU solution | 720 gr |
| DMF (dimethylformamide) | 180 gr |
| Pigment | just enough |

Preferably also:
**an intermediate layer** with lower module, which as the previous one, contributes to provide the characteristics of colour and structural strength, preferably of polyurethane nature, but it may also be based on other polymers of the type PVC, acrylic polymer dispersed in solvent or water.

A polyurethane (PU) formulation is given by way of example:

| | |
|---|---|
| 35% PU solution from polycarbonate | 790 gr |
| DMF (dimethylformamide) | 110 gr |
| Pigment | just enough |

Preferably also:
**an expanded layer** which contributes to achieve the desired thickness with a relatively reduced weight.

The composition of said layer is preferably based on polyurethane but it may be also based on other polymers of the type PVC, acrylic polymer dispersed in water/solvent.

A polyurethane (PU) formulation is given by way of example:

| | |
|---|---|
| Polyurethane pre-polymer from polyether | 925 gr |
| Expanding agent | 10 gr |
| Cross-linking agent | 65 gr |
| Pigment | just enough |

The total grammage of the composite expressed in gr/m² ranges between 30 gr/m² and 800 gr/m².

The above composite or composed layer may be used for providing the panel either as such, i.e. directly coupled during the lamination step with the base kraft paper impregnated with phenolic resin, or further coupled with a textile (textiles, non-wovens) or cellulose liner.

The invention will be now described more in detail with reference to the annexed Figure 1 which is intended as illustrative and non -limiting while Figures 2 and 3 are not according to the invention, where:

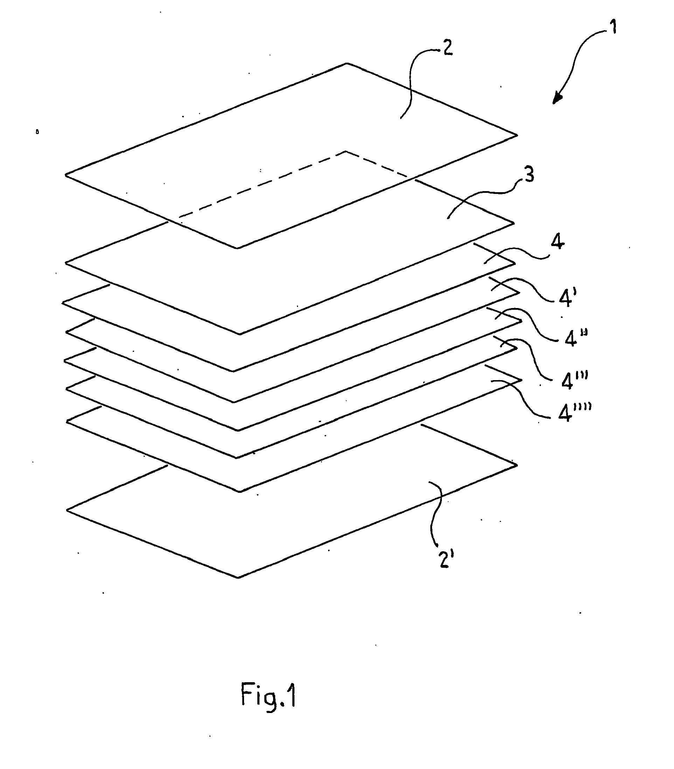

Fig. 1, 2 and 3 are exploded, schematic views of a decorative layered panel .

With reference to Fig. 1, the panel 1 according to the invention comprises two layers 2 and 2' of cellulose impregnated with melamine resin, or overlays, which function as protective layers and are positioned at each upper and lower end of the panel 1. The panel 1 has a layer of a polymeric component, such as polyurethane 3. The inner part, or core, of the panel is, in this case, formed by a plurality of layers 4, 4', 4", 4"', 4"" of kraft paper impregnated with resin, such as phenolic resin. The protective layers 2 and 2' are transparent and may also be omitted, as well as the number of the layers composing the inner part or core can be varied, according to the thickness of the panel and the characteristics to be obtained.

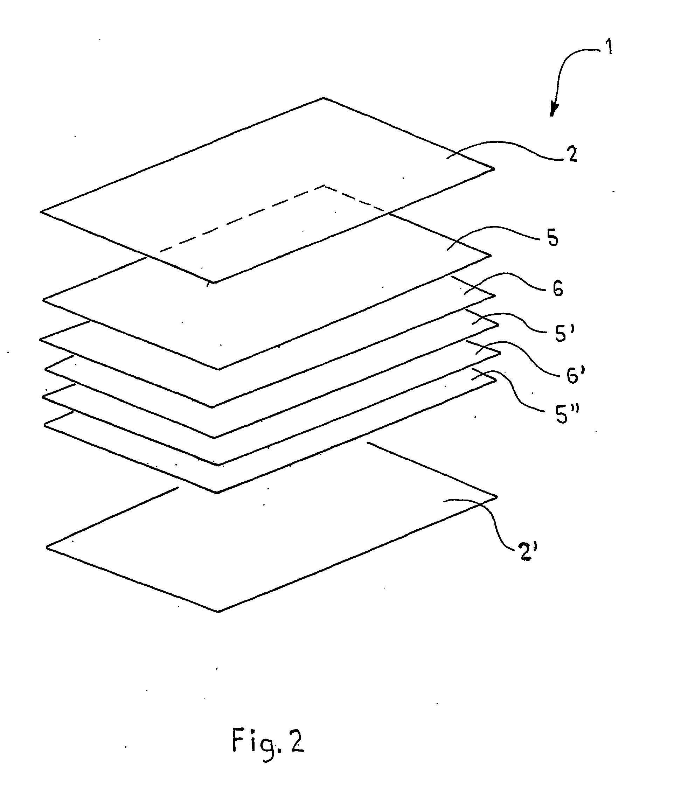

Fig. 2 relates to a panel 1 which -comprises two layers 2 and 2' of cellulose impregnated with melamine resin, or overlays, which function as protective layers and are positioned at each upper and lower end of the panel. In this case, the inner part, or core, of the panel 1 is provided by a plurality of layers consisting of an alternation of non-woven layers (6 and 6') and cellulose impregnated with melamine resin (5, 5'. 5"), where the uppermost 5 and lowermost 5" layers are always made of cellulose/melamine resin, which has a protective function in addition to support.

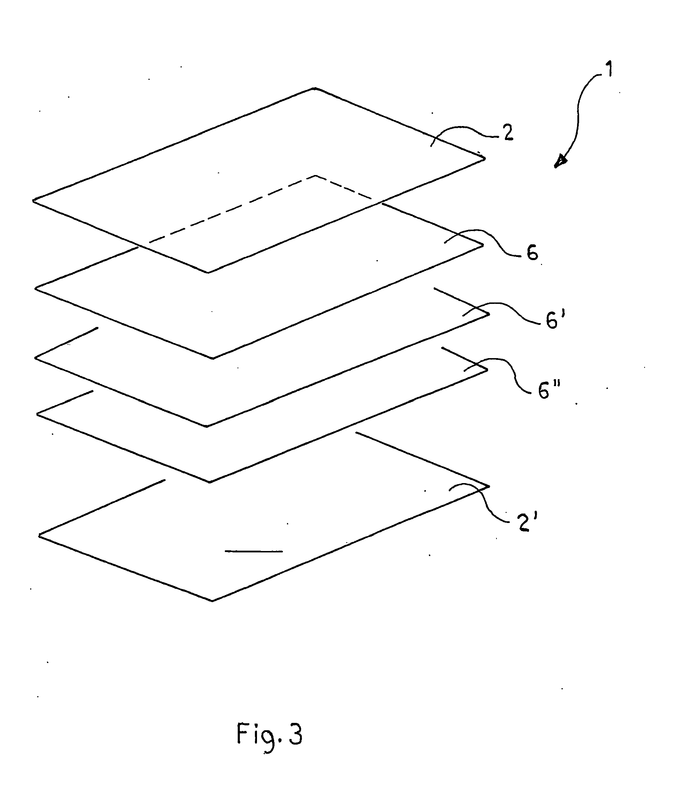

Fig. 3 relates to yet another panel 1 which comprises two layers 2 and 2' of cellulose impregnated with melamine layer, or overlays, which function as protective layers and are positioned at each upper and lower end of the panel. In this case, the inner part, or core, of the panel 1 is provided by a plurality of layers 6, 6', 6" of only non-woven until the desired thickness is achieved, which are coupled to each other.

In the exemplary embodiments from Fig. 2 and 3, the protective layers 2 and 2' are also transparent and may also be omitted, as well as the number of layers composing the inner part, or core, can be varied according to the thickness of the panel and the characteristics to be obtained.

## Claims

1. Layered plastic decorative panel of the kind "laminate" (1), comprising a main part, or core, obtained from at least one sheet or layer of paper impregnated with resin (4) and at least one layer (3) of a polymeric component selected from polyurethane or mixtures thereof, said core and said polymeric component being directly coupled to each other in the lamination step by the action of the temperature and pressure, said polymeric component (3) consisting of:
a surface layer as follows: .
| | |
|---|---|
| 35% dry PU solution | 720 gr |
| DMF (dimethylformamide) | 180 gr |
| Pigment | just enough |
an intermediate layer as follows:
| | |
|---|---|
| 35% polycarbonate PU solution | 790 gr |
| DMF (dimethylformamide) | 110 gr |
| Pigment | just enough |
an expanded layer, as follows:
| | |
|---|---|
| Polyurethane pre-polymer from polyether | 925 gr |
| Expanding agent | 10 gr |
| Cross-linking agent | 65 gr |
| Pigment | just enough |

2. The panel (1) according to claim 1, **characterized in that** said paper is kraft paper and said resin is phenolic resin.

3. The panel (1) according to claim 1, **characterized in that** said polyurethane is coupled with polyester in the form of a non-woven.

4. Use of the panel (1) according to the preceding claims in the furniture field, for making moving walls, for making business furniture.

5. Use of the panel (1) of the preceding claims in the building, furniture field, for providing lighting spots.

6. The panel (1) according to claim 1, **characterized in that** the total grammage of said polymer component expressed in gr/m² ranges between 30 gr/m² and 800 gr/m².

7. The panel (1) according to the preceding claims, **characterized in that** it further comprises at least one protective outer layer (2).

8. The panel (1) according to claim 7, **characterized in that** said protective layer (2) is made of cellulose or derivatives thereof impregnated with melamine resin.

9. The panel (1) according to the preceding claims, **characterized in that** it is thermoformed.

10. A process for preparing a panel (1) according to the preceding claims, comprising a pressing step and a simultaneous coupling step carried out by the action of temperature.

11. Process according to claim 10, **characterized in that** said pressing step is carried out at a pressure in the range from 40 kg/cm² 150 kg/cm², preferably a pressure of 80 kg/cm².

12. Process according to claim 10, **characterized in that** said coupling step is carried out at a temperature ranging between 100°C and 400°C.

13. Process for preparing a panel (1) according to claim 10, **characterized in that** the duration of the pressing step is at least 60' and the temperature ranges between 100°C and 160°C.

14. Furniture elements, lighting elements, interior partitions made with the panels (1) of the preceding claims.

## Patentansprüche

1. Geschichtetes dekoratives Kunststoffelement (1) der Art eines Laminats, umfassend einen Hauptteil oder Kern, erhalten aus wenigstens einem Blatt oder einer Schicht aus mit Harz (4) imprägniertem Papier und wenigstens einer Schicht (3) aus einer Polymerkomponente ausgesucht aus Polyurethan oder Mischungen daraus, wobei der Kern und die Polymerkomponente während des Laminationsschritts direkt durch Einwirkung von Temperatur und Druck miteinander verbunden werden, wobei die Polymerkomponente (3) besteht aus:
einer Oberflächenschicht wie folgt:
| | |
|---|---|
| 35 %ige trockene PU-Lösung | 720 g |
| DMF (Dimethylformamid) | 180 g |
| Pigment | gerade ausreichend |
einer Zwischenschicht wie folgt:
| | |
|---|---|
| 35 %ige Polycarbonat-PU-Lösung | 790 g |
| DMF (Dimethylformamid) | 110 g |
| Pigment | gerade ausreichend |
einer Dehnungsschicht wie folgt:
| | |
|---|---|
| Polyurethan-Präpolymer aus Polyether | 925 g |
| Dehnungsmittel | 10 g |
| Vernetzungsmittel | 65 g |
| Pigment | gerade ausreichend |

2. Element (1) gemäß Anspruch 1, **dadurch gekennzeichnet, dass** das Papier Kraftpapier ist und das Harz Phenolharz ist.

3. Element (1) gemäß Anspruch 1, **dadurch gekennzeichnet, dass** das Polyurethan mit Polyester in der Form eines Vlies verbunden ist.

4. Verwendung des Elements (1) gemäß den vorhergehenden Ansprüchen im Möbelbereich, zur Herstellung beweglicher Wände, zur Herstellung von Büromöbeln.

5. Verwendung des Elements (1) der vorhergehenden Ansprüche in Gebäuden, im Möbelbereich, zur Bereitstellung von Leuchtstellen.

6. Element (1) gemäß Anspruch 1, **dadurch gekennzeichnet, dass** gesamte Flächengewicht der Polymerkomponente ausgedrückt in Gramm pro Quadratmeter zwischen 30 g/m² und 800 g/m² liegt.

7. Element (1) gemäß der vorhergehenden Ansprüche, **dadurch gekennzeichnet, dass** es weiterhin wenigstens eine äußere Schutzschicht (2) umfasst.

8. Element (1) gemäß Anspruch 7, **dadurch gekennzeichnet, dass** die Schutzschicht (2) aus mit Melaminharz imprägnierter Cellulose oder Derivaten davon hergestellt ist.

9. Element (1) gemäß der vorhergehenden Ansprüche, **dadurch gekennzeichnet, dass** es warmgeformt ist.

10. Verfahren zur Bereitstellung eines Elements (1) gemäß der vorhergehenden Ansprüche, umfassend einen Pressschritt und einen gleichzeitigen Verbindungsschritt ausgeführt durch die Einwirkung von Temperatur.

11. Verfahren gemäß Anspruch 10, **dadurch gekennzeichnet, dass** der Pressschritt bei einem Druck im Bereich von 40 kg/cm² bis 150 kg/cm², vorzugsweise bei einem Druck von 80 kg/cm², ausgeführt wird.

12. Verfahren gemäß Anspruch 10, **dadurch gekennzeichnet, dass** der Verbindungsschritt bei einer Temperatur zwischen 100°C und 400°C ausgeführt wird.

13. Verfahren zur Bereitstellung eines Elements (1) gemäß Anspruch 10, **dadurch gekennzeichnet, dass** die Dauer des Pressschritts wenigstens 60' ist und die Temperatur zwischen 100°C und 160°C liegt.

14. Möbelelemente, Lichtelemente, Raumteiler hergestellt mit dem Element (1) nach den vorhergehenden Ansprüchen.

## Revendications

1. Panneau décoratif plastique en couches du type « stratifié » (1), comprenant une partie principale, ou âme, obtenue à partir d'une feuille ou d'une couche de papier imprégné de résine (4) et au moins une couche (3) d'un composant polymère choisi parmi le poly(uréthane) ou les mélanges de celui-ci, ladite âme et ledit composant polymère étant directement couplés l'un à l'autre dans l'étape de stratification par l'action de la température et de la pression, ledit composant polymère (3) consistant en :
une couche de surface comme suit :
| | |
|---|---|
| solution de PU sèche à 35 % | 720 g |
| DMF (diméthylformamide) | 180 g |
| pigment | juste assez |
une couche intermédiaire comme suit :
| | |
|---|---|
| solution de PU poly(carbonate) à 35 % | 790 g |
| DMF (diméthylformamide) | 110 g |
| pigment | juste assez |
une couche expansée comme suit : prépolymère de poly(uréthane) à
| | |
|---|---|
| partir de poly(éther) | 925 g |
| agent d'expansion | 10 g |
| agent de réticulation | 65 g |
| pigment | juste assez. |

2. Panneau (1) selon la revendication 1, **caractérisé en ce que** ledit papier est du papier kraft et ladite résine est une résine phénolique.

3. Panneau (1) selon la revendication 1, **caractérisé en ce que** ledit poly(uréthane) est couplé avec du poly(ester) sous la forme d'un non-tissé.

4. Utilisation du panneau (1) selon les revendications précédentes dans le domaine de l'ameublement, pour fabriquer des parois amovibles, pour fabriquer des meubles commerciaux.

5. Utilisation du panneau (1) des revendications précédentes, dans la construction, le domaine de l'ameublement, pour former des spots d'éclairage.

6. Panneau (1) selon la revendication 1, **caractérisé en ce que** le grammage total dudit composant polymère exprimé en g/cm² varie entre 30 g/cm² et 800 g/cm².

7. Panneau (1) selon les revendications précédentes, **caractérisé en ce qu'**il comprend en outre au moins une couche externe protectrice (2).

8. Panneau (1) selon la revendication (7), **caractérisé en ce que** ladite couche protectrice (2) est constituée de cellulose ou de ses dérivés imprégnés avec de la résine mélamine.

9. Panneau (1) selon les revendications précédentes, **caractérisé en ce qu'**il est thermoformé.

10. Procédé de préparation d'un panneau (1) selon les revendications précédentes, comprenant une étape de pressage et une étape de couplage simultanée réalisée par l'action de la température.

11. Procédé selon la revendication 10, **caractérisé en ce que** ladite étape de pressage est réalisée à une pression dans la plage de 40 kg/m² à 150 kg/m², de préférence sous une pression de 80 kg/cm².

12. Procédé selon la revendication 10, **caractérisé en ce que** ladite étape de couplage est réalisée à une température variant entre 100 °C et 400 °C.

13. Procédé de préparation d'un panneau (1) selon la revendication 10, **caractérisé en ce que** la durée de l'étape de pressage est d'au moins 60 minutes et la température varie entre 100 °C et 160 °C.

14. Eléments de meuble, éléments d'éclairage, cloisons intérieures fabriqués avec les panneaux (1) des revendications précédentes.
